Europäisches Patentamt

European Patent Office

Office européen des brevets

(11) Numéro de publication: **0 683 400 A1**

## DEMANDE DE BREVET EUROPEEN

(21) Numéro de dépôt: **95106587.9**

(22) Date de dépôt: **02.05.95**

(51) Int. Cl.⁶: **G01S 15/52**

(30) Priorité: **17.05.94 FR 9406094**

(43) Date de publication de la demande:
**22.11.95 Bulletin 95/47**

(84) Etats contractants désignés:
**DE ES GB IT**

(71) Demandeur: **VALEO ELECTRONIOUE**
**2 rue Fernand Pouillon**
**F-94042 Creteil Cédex (FR)**

(72) Inventeur: **Rydel, Charles**
**70, rue d'Aubervilliers**
**F-75019 Paris (FR)**

(74) Mandataire: **Gamonal, Didier et al**
**Valeo Management Services**
**Sce Propriété Industrielle**
**2, rue André Boulle**
**B.P. 150**
**F-94004 Créteil (FR)**

(54) **Procédé de détection de mouvement par effet Doppler à l'aide d'un rayonnement ultrasonore, dispositif de détection de mouvement par effet Doppler et dispositif d'alarme anti-intrusion pour habitacle notamment de véhicule.**

(57) La présente invention concerne un procédé de détection de mouvement par effet Doppler à l'aide d'un rayonnement ultrasonore. Elle concerne aussi un dispositif de détection de mouvement par effet Doppler et son application à un dispositif d'alarme anti-intrusion pour habitacle de véhicule.

Selon l'invention, une unique capsule ultrasonore (4) fonctionne simultanément en émission et en réception en fonctionnant sur un point de fonctionnement réglé par un dipôle d'adaptation (5) sur le facteur de qualité minimum de la capsule. Une comparaison de phases (6) permet de produire un signal de détection Doppler (9) dont le niveau (10) est comparé à un seuil qui permet de déclencher une alarme de détection de mouvement (10).

Application à la sécurité antivol.

Figure 1

EP 0 683 400 A1

La présente invention concerne un procédé et un dispositif de détection de mouvement par effet Doppler ultrasonore. Elle trouve application notamment pour les dispositifs d'alarme par intrusion dans un habitacle comme l'habitacle d'un véhicule.

Dans l'état de la technique, on a déjà proposé de surveiller l'intérieur d'un habitacle à l'aide d'un système d'alarme ultrasonore qui comporte une première capsule ultrasonore générant une onde d'interrogation et une seconde capsule ultrasonore de réception d'une onde de réponse produite par les objets situés dans le volume surveillé.

Un circuit de traitement compare les changements relatifs intervenus dans le signal de détection et/ou par rapport au signal d'émission de façon ou bien à travailler en mode écho pour détecter la présence d'un objet à une distance donnée de la capsule de réception, ou bien en mode Doppler pour mesurer la vitesse de déplacement d'un objet se trouvant dans le véhicule.

De tels dispositifs, quand ils travaillent en mode Doppler, exigent donc deux circuiteries différentes pour activer deux capsules ultrasonores.

Or, les capsules ultrasonores travaillent de manière relativement indifférenciée en émission et en réception dans la mesure où elles utilisent l'effet piezo électrique qui est un effet électromécanique réversible, un signal électrique d'excitation produisant une onde de pression en émission, et une onde de pression reçue par la capsule produisant un signal électrique de détection aux bornes de la capsule.

De ce fait, on a déjà proposé de faire travailler en alternat une seule capsule ultrasonore qui, pendant une première fraction de temps, produit une onde d'interrogation, puis, dans une seconde fraction de temps, examine les ondes réfléchies dans le volume surveillé.

Un tel système travaille de façon correcte en mode écho puisque, les échos réfléchis par les objets mettent un temps déterminé pour revenir à la capsule. Cependant en mode Doppler, pour renforcer la sensibilité de la mesure, il est souhaitable de pouvoir travailler en permanence sur le signal de réception. De ce fait, le système en alternat ne fonctionne pas de façon satisfaisante en mode Doppler.

L'invention porte remède à ces inconvénients de l'état de la technique en proposant un procédé de détection de mouvement par effet Doppler ultrasonore. Le procédé de l'invention se caractérise en ce qu'il ne met en oeuvre qù'une seule capsule ultrasonore travaillant simultanément en émission et en réception, et en ce que:

- dans une première étape, on produit un signal d'excitation électrique, dont les caractéristiques en amplitude, fréquence et/ou phase sont modifiables ;

- dans une seconde étape, on relie ledit signal d'excitation électrique aux bornes d'une capsule génératrice d'une onde ultrasonore d'émission ;

- dans une troisième étape, on prélève un signal de détection produit par la capsule et on compare les caractéristiques en amplitude, fréquence et/ou phase dudit signal de détection produit par la capsule avec celles dudit signal d'excitation électrique, de façon à produire un signal de détection de mouvement Doppler ; et, simultanément

- on asservit les caractéristiques du signal d'excitation en fonction de celles du signal de détection produit par la capsule, de façon à stabiliser le fonctionnement en détection autour d'une valeur optimisant le rapport sensibilité de réception sur portée d'émission.

Selon un aspect de l'invention, le procédé de détection de mouvement par effet Doppler consiste à réaliser la comparaison des caractéristiques, comme la phase, par une multiplication analogique.

Selon un aspect de l'invention, le procédé de détection de mouvement par effet Doppler, les signaux d'excitation électrique et de détection produits par la capsule étant de forme en créneau, consiste à exécuter la comparaison des caractéristiques, comme la phase, par une opération logique de type OU exclusif.

Selon un aspect de l'invention, le procédé consiste en ce que la production du signal de détection de mouvement Doppler est réalisée par filtrage passe bas du signal de comparaison de phases.

Selon un autre aspect de l'invention, le procédé de détection de mouvement par effet Doppler consiste en ce que la production du signal d'excitation électrique est réalisée par un oscillateur commandé en tension, la commande en tension étant réalisée par le prélèvement d'une composante fréquentielle du signal de détection produit par la capsule.

Selon un autre aspect de l'invention, le procédé de détection de mouvement par effet Doppler consiste à filtrer les signaux de faible variation de tension de façon à s'affranchir d'une dérive thermique dans l'habitacle surveillé.

Selon un autre aspect de l'invention, le procédé de détection de mouvement par effet Doppler consiste, les signaux d'excitation et de détection étant de forme en créneau, à travailler sur les fronts descendants desdits signaux lors de la comparaison des phases.

L'invention concerne aussi un dispositif de détection de mouvement par effet Doppler au moyen d'un rayonnement ultrasonore. Le dispositif de détection de mouvement de l'invention se caractérise en ce qu'il comporte :

- un générateur de signal dont une borne de sortie produit un signal d'excitation électrique et dont une borne d'entrée reçoit un signal de commande et qui est relié à un circuit de réglage des caractéristiques en amplitude, fréquence et/ou phase du signal d'excitation électrique ;
- une capsule ultrasonore connectée par une première borne à une borne de sortie du générateur de signal produisant un signal d'excitation électrique ;
- un dipôle d'adaptation connecté entre une seconde borne de la capsule et la masse électrique du montage ;
- un comparateur de caractéristiques de signal en amplitude, fréquence et/ou phase, dont une première entrée est connectée au point commun de la capsule ultrasonore et de son dipôle d'adaptation, et dont une seconde entrée est connectée à la sortie du générateur de signal produisant le signal d'excitation électrique ;
- un circuit de commande, par extraction d'une composante du signal de détection produit par la capsule pour stabiliser le fonctionnement du dispositif autour d'un point optimisant le rapport sensibilité de réception sur portée d'émission, et dont une borne de sortie produit un signal de commande qui contrôle les caractéristiques du signal d'excitation électrique ;
- un circuit d'extraction du signal de détection de mouvement Doppler dont l'entrée est connectée à une borne de sortie du comparateur de caractéristiques ou du circuit de commande ;
- un circuit de détection du mouvement Doppler connecté à la sortie du circuit d'extraction de signal de détection.

Selon un aspect de l'invention, dans le dispositif de détection de mouvement, le générateur de signal d'excitation électrique est constitué par un oscillateur commandé en tension.

Selon un autre aspect de l'invention, dans le dispositif de détection de mouvement, la sortie du circuit du générateur est connectée à une première borne de la capsule par l'intermédiaire d'un amplificateur.

Selon un autre aspect de l'invention, dans le dispositif de détection de mouvement, le circuit de détection de signal Doppler est constitué par un filtre passe bas.

Selon un autre aspect de l'invention, dans le dispositif de détection de mouvement, le circuit oscillateur commandé en tension est connecté par son entrée de commande de tension à un filtre intégrateur séparant une composante fréquentielle déterminée du reste du signal.

Selon un autre aspect de l'invention, dans le dispositif de détection de mouvement, le circuit de détection de signal Doppler est connecté à l'entrée d'un circuit d'alarme constitué par un circuit de détection à seuil et d'un circuit d'alarme proprement dit.

Selon un autre aspect de l'invention, dans le dispositif de détection de mouvement, le dipôle d'adaptation est constitué par une résistance telle que la charge de la capsule corresponde à la charge réglant le facteur de qualité de la capsule à la valeur minimale.

Selon un autre aspect de l'invention, dans le dispositif de détection de mouvement, entre le circuit de détection et le comparateur de caractéristiques, on introduit un retard de phase correspondant à la sensibilité maximale du système.

L'invention concerne aussi un dispositif d'alarme ultrasonore par détection de mouvement par effet Doppler caractérisé en ce qu'il comporte un dispositif de détection de mouvement Doppler selon l'invention dont la capsule est disposée dans un habitacle à surveiller et en ce que le circuit de détection de mouvement par effet Doppler est connecté à un circuit générant une alarme en cas de détection d'une intrusion dans ledit habitacle.

D'autres caractéristiques et avantages de la présente invention seront compris à l'aide de la description et des figures qui sont :
- La figure 1, un schéma représentant un dispositif selon un premier mode de réalisation de l'invention ;
- Les figure 2 à 4, des diagrammes expliquant le fonctionnement du circuit de la figure 1 ;
- La figure 5 : un schéma d'un second mode de réalisation de l'invention ;
- Les figures 6 à 11 : des détails de réalisation du schéma de la figure 5 ;
- La figure 12 : des diagrammes de fonctionnement du schéma de la Figure 5.

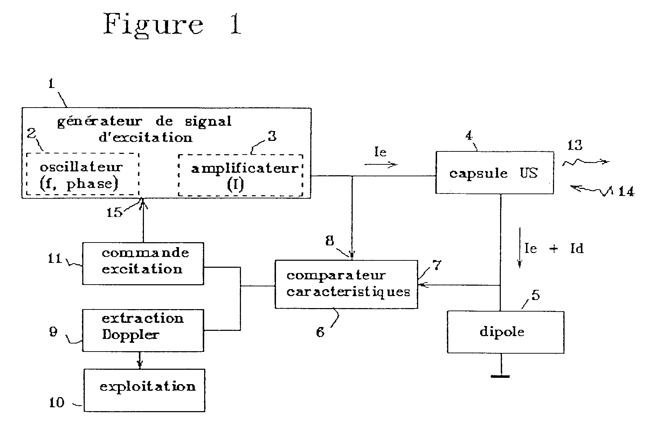

A la figure 1, on a représenté un schéma d'un premier mode de réalisation de la présente invention. Le dispositif de détection de mouvement de l'invention comporte un générateur 1 d'un signal d'excitation électrique qui est connecté à une capsule ultrasonore 4. Un circuit d'amplification 3 permet de produire un courant Ie d'amplitude suffisante dans la capsule de façon à rayonner une puissance suffisante. Le réglage est fait en fonction de l'application, par exemple, en fonction du volume utile dans le cas d'un système d'alarme de véhicule, installé dans l'habitacle surveillé par la capsule 3.

Le signal émis 13 par la capsule 4 est intercepté par des objets se trouvant dans l'habitacle et en particulier par des objets en mouvement. Une onde modulée en phase par effet Doppler 14 revient vers la capsule 4 et produit un signal de détection Id qui se superpose au signal d'excitation électrique Ie de façon à produire un signal Id + Ie, constitué de la somme du signal d'excitation électrique et du signal de détection Doppler qui est fourni à une première entrée 7 d'un comparateur de caractéristiques 6. Une seconde entrée 8 du comparateur de caractéristiques 4 est connectée à une sortie du générateur 1 de signal d'excitation électrique de façon à recevoir un signal de référence de caractéristique. A la sortie du comparateur de caractéristiques 4, on produit un signal de détection dans lequel on a retiré le signal d'excitation électrique Ie. Le signal de détection Doppler est transmis à un circuit d'extraction Doppler, constitué par un filtre passe bas 9 qui permet de produire en sortie un signal de détection Doppler, connecté à un circuit d'exploitation 10. Un tel circuit permet de produire une alarme quand un mouvement d'une certaine forme est détecté, en particulier, s'il dépasse la vitesse de mouvement naturel des masses d'air dans l'habitacle surveillé. Le signal de détection issu du comparateur 6 est transmis à un générateur de signal d'asservissement 11 du générateur 1 du signal d'excitation électrique.

Dans un premier mode de réalisation, le comparateur de caractéristiques 4 est constitué par un multiplieur analogique qui reçoit un premier signal 7 modulé en phase par effet Doppler à une fréquence $f_D$. Le second signal 8 de référence de phase est un signal à la fréquence f0 qui correspond à la fréquence du signal d'excitation électrique de la capsule 3, et qui est donc sensiblement égal à la fréquence de résonance de la capsule ultrasonore. On réalise donc l'opération : Ie x (Ie + Id) = $Ie^2$ + IexId.

Du fait que les mouvements détectés sont de faible vitesse, la fréquence Doppler $f_D$ est de l'ordre de 250 Hz quand la fréquence de résonance de la capsule est aux alentours de 40 kHz. En choisissant une fréquence f0 élevée du signal d'excitation Ie, on constate donc que la fréquence Doppler se trouve très loin de la fréquence d'excitation Ie qui permet de générer l'onde ultrasonore.

Dans ce mode de réalisation, on a préféré utiliser à titre de comparateur de caractéristiques un multiplieur analogique. Ebn sortie du multiplieur 4, on produit donc des composantes fréquentielles autour des fréquences 2f0, f0 + fd, et f0-fd. On produit donc une composante de détection Doppler bien séparable de la composante d'excitation, à l'aide d'un filtrage adapté.

Le filtre passe bas 9 permet d'extraire le signal Doppler 10 tandis que sa composante continue obtenue par intégration par exemple, en sortie du filtre passe bas, est réinjectée sur le générateur 1 pour réajuster la fréquence de sortie du générateur 1. Cette fermeture de la chaîne de traitement réalise en fait une boucle à verrouillage de phase dans laquelle l'élément stabilisateur est constitué par la capsule ultrasonore 4 elle- même. On comparera l'invention à la solution classique dans laquelle un élément de référence de phase externe est ajouté au schéma.

A cette fin, dans un mode préféré de réalisation, le générateur 1 de signal d'excitation électrique comporte un oscillateur commandé en tension 2. Une entrée de commande 15 du générateur 1 reçoit donc un signal de tension qui permet de faire varier la fréquence de sortie de l'oscillateur commandé en tension 2, dans la plage de réglage autour du point de fonctionnement.

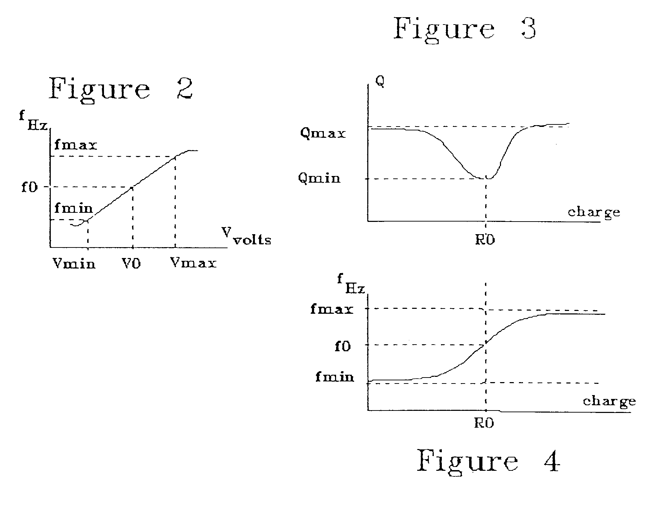

A la figure 2 on a représenté le diagramme de fonctionnement d'un tel circuit. Entre deux tensions de commande V respectivement $V_{min}$ et $V_{max}$, le signal de sortie présente une fréquence f variant sensiblement linéairement entre une valeur $f_{min}$ et $f_{max}$. En choisissant des paramètres de fonctionnement de telle sorte que la fréquence f0 centrale de fonctionnement de l'oscillateur 2 corresponde à la fréquence de résonance de la capsule 4, il est possible d'asservir la fréquence f0 du signal d'excitation en fonction des résultats de détection réelle de la capsule 3. On évite ainsi de calculer de façon précise pour chaque montage la fréquence centrale de résonance f0 de la capsule, puisque en effet, la fabrication d'une telle capsule ne permet pas de garantir une fréquence de résonance constante dans tout un lot de fabrication. La boucle d'asservissement, constituée par la réinjection du signal de détection par le moyen du circuit de commande 11, permet donc de s'affranchir des dispersions dans le montage.

Selon l'invention, on choisit une capsule chargée à l'aide d'un dipôle d'adaptation (dipôle 5 du mode de réalisation de la figure 1) de façon à se situer en un point de fonctionnement de la capsule situé approximativement entre la fréquence de résonance pour l'émission et la fréquence de résonance pour la réception.

A la figure 4, on a représenté le diagramme de la fréquence de résonance en fonction de la charge électrique présentée par la capsule 4, en série avec son dipôle d'adaptation 5. Dans un mode de réalisation préféré, le dipôle 5 est purement résistif.

A la figure 4, la fréquence de résonance série de la capsule correspond à une charge électrique faible (R<R0) tandis que la résonance parallèle est obtenue pour une charge résistive présentée par la capsule de valeur maximale (R>R0). En se situant au minimum Qmin du facteur de qualité Q représenté à la figure 3, on se situe en un point de fonctionnement de la capsule qui produit la meilleure largeur de bande de réception de façon à recevoir une excursion de fréquence par effet Doppler qui soit suffisamment importante pour détecter des mouvements ou lents ou rapides.

Comme la capsule 4 est choisie dans un lot de capsules affecté de fortes dispersion des valeurs caractéristiques, pour établir une charge électrique convenable, on monte en série avec la capsule un dipôle d'adaptation de façon à fonctionner avec une charge $R_0$ correspondant au minimum du facteur de qualité $Q_{min}$.

Dans un mode de réalisation préféré, en travaillant à 40,5 kHz on a obtenu une charge totale de 3,4 kilo ohm quand on produisait une puissance de rayonnement maximale.

On est alors au minimum du facteur de qualité de la capsule.

A la figure 2, on montre qu'il suffit de produire une tension de commande V0 pour que l'oscillateur commandé en tension 2 produise un signal de sortie de fréquence f0, stabilisée. Selon la capsule utilisée, V0 peut varier entre Vmin et Vmax, tensions entre lesquelles la fréquence de sortie f0 évolue linéairement, ce qui réduit les distorsions lors des variations de charge de la capsule.

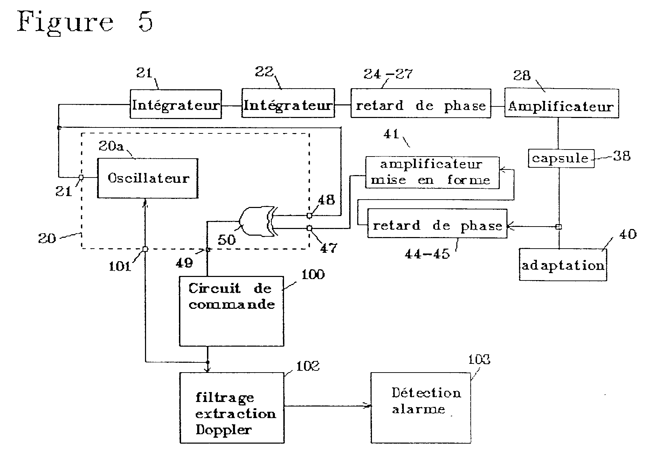

A la figure 5, on a représenté un second mode de réalisation du dispositif de détection selon l'invention dans lequel on utilise un circuit intégré 20, générateur d'un signal d'excitation électrique. Le circuit intégré 20 comporte un oscillateur commandé en tension 20a, dont la borne de sortie 21 produit des signaux carrés de forme logique. De façon à exciter une capsule ultrasonore 38 avec un signal d'excitation électrique aussi sinusoïdal que possible, on a utilisé deux intégrateurs successifs 21 et 22 de façon à produire, sur la sortie du premier intégrateur 21, un signal triangulaire, et sur la sortie du second intégrateur 22, un signal sensiblement parabolique. L'approximation d'un signal sinusoïdal à la fréquence de résonance de la capsule par un signal parabolique n'entraîne qu'une distorsion faible qui a été minimisée à 4% par un filtrage convenable, et notamment par la suppression de la composante continue, surtout si la capsule ultrasonore 38 n'admet pas le courant continu. Cette forme de signal d'excitation électrique a donné des résultats suffisants pour la sensibilité du détecteur de mouvement par effet Doppler de l'invention.

Le signal de sortie du second intégrateur 22 est transmis à un circuit 24-27 producteur d'un retard de phase de façon à faire tourner la phase du circuit de la fréquence de résonance série à la phase produisant le maximum de sensibilité.

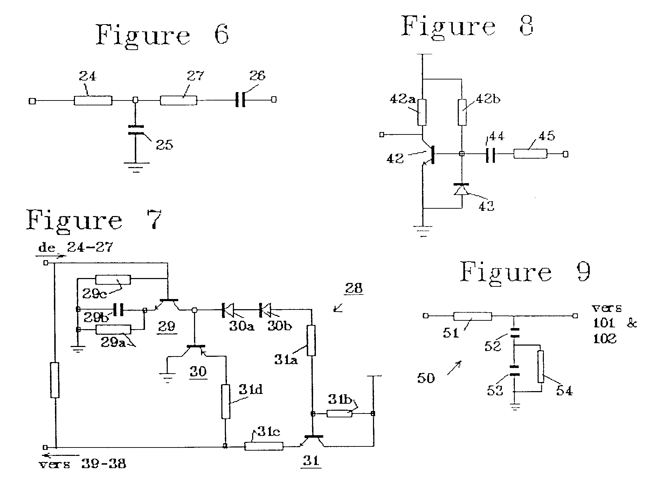

Le circuit à retard de phase 24-27, représenté à la figure 6, est constitué par une résistance 24 et un condensateur 25 connectés en série avec un circuit constitué d'un condensateur 26 et d'une résistance 27. Son rôle sera mieux compris ultérieurement dans la description du fonctionnement du circuit.

Le signal d'excitation électrique retardé en phase est entré sur un amplificateur d'adaptation d'impédance 28, représenté à la figure 7, qui comporte un premier transistor 29, un second transistor 30 et un troisième transistor 31. Le transistor 31 et le transistor 30 sont montés en push-pull de façon à venir charger la capsule 38 à travers un condensateur de couplage 39, permettant de couper le continu.

La capsule 38 est connectée à la masse électrique par l'intermédiaire d'un dipôle d'adaptation 40 qui est ici constitué par une résistance telle que la charge totale de la capsule corresponde à la résistance R0 produisant le facteur de qualité minimum de la capsule.

Le point commun entre la capsule 38 et la résistance d'adaptation 40 est transmise à un amplificateur de mise en forme 41, représenté à la figure 8. Le rôle de ce circuit est de transformer en signal logique le signal de détection ou de captation, de forme analogique, produit par la capsule 38. De ce fait, la suite de la détection peut se faire à l'aide de circuits logiques, notamment au moyen du circuit intégré 20. Dans un exemple de réalisation, on a utilisé le circuit CD4046.

Le circuit 41 est constitué par un transistor NPN 42 dont le chemin base émetteur est connecté par une diode 43 fonctionnant en inverse. L'amplificateur comporte aussi une résistance de polarisation de base 42b et une résistance de collecteur 42a. L'entrée de l'amplificateur 41 de mise en forme, tel que représenté à la figure 8, est connectée à la capsule 38 par l'intermédiaire d'un circuit bouchon constitué par un condensateur 44 et une résistance 45 montés en série. Ce circuit constitue un circuit de retard de phase qui permet ainsi qu'on l'expliquera plus loin de travailler au maximum de sensibilité.

Le signal de détection mis en forme, produit sur le collecteur du transistor 42, est connecté à une première entrée 47 du circuit 20 dans lequel se trouve une porte OU exclusif 50, et qui est exploitée en comparateur de phase dans le circuit de l'invention. Le signal en créneau produit par la sortie 21 du circuit 20a oscillateur commandé en tension est prélevée et connectée à une seconde entrée 48 de circuit 20 d'oscillateur commandé en tension, elle-même raccordée à une seconde entrée de la porte OU exclusif du circuit 20. Les phases des deux signaux connectés aux deux entrées de la porte OU exclusif 50 interne au circuit 20 sont donc comparées de façon à produire un signal à la sortie 49 du circuit intégré 20 et qui est connecté à un filtre 100 de calage de la fréquence de fonctionnement de l'oscillateur commandé en tension 20a.

Le signal de sortie 49 du circuit intégré 20 (c'est-à-dire le signal issu du circuit de comparaison de phase constitué par la porte OU exclusif 50, interne au circuit intégré 20, est connecté à un circuit de commande 100, qui produit un signal de commande en tension qui est connecté à une borne d'entrée 101 du circuit 100 permet de stabiliser la fréquence de fonctionnement de l'oscillateur 20a commandé en tension. Dans un mode de réalisation préféré, représenté à la figure 9, le circuit de commande 100 est constitué par un filtre passe- bas, sensiblement calé sur la fréquence de résonance de la capsule ultrasonore. Le filtre passe- bas, qui a l'effet d'un intégrateur, permet de commander l'oscillateur sur la position.

De ce fait, dans ce mode de réalisation, trois fonctions principales sont assurées par la capsule ultrasonore du dispositif de l'invention :
- génération des ondes ultrasonores d'interrogation
- captation des ondes ultrasonores modulées par l'effet Doppler ;
- stabilisation du fonctionnement fréquentiel du générateur de signal d'excitation électrique de la capsule.

On évite ainsi de recourir à un composant supplémentaire qui, dans la technique classique des oscillateurs, devrait être constitué par un quartz de référence, dit quartz pilote, monté dans le réseau de rétroaction du montage oscillateur.

Dans le mode de réalisation de la figure 9, le circuit de commande 100 comporte une résistance 51, connectée à la sortie 49 de la porte OU exclusif 50 du circuit intégré 20, et connectée en série avec une branche de circuit constituée par un condensateur 52 connecté en série avec un circuit parallèle constitué d'un condensateur 53 et d'une résistance 54, connectés à la masse.

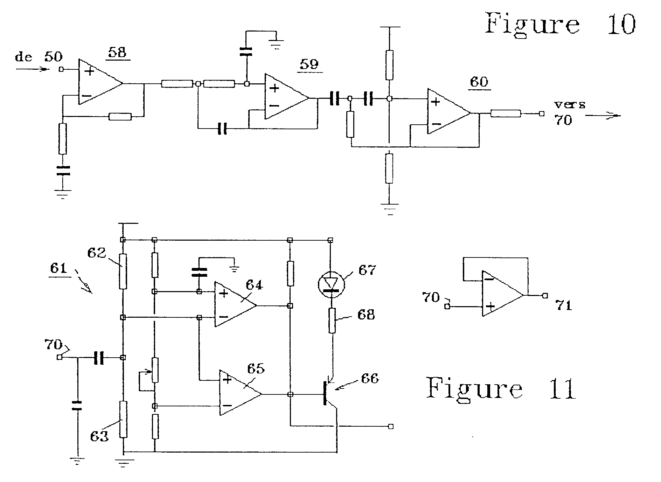

Le point commun entre la résistance 51 et le condensateur 52 est connecté à la sortie du circuit de commande 100, et il est raccordé d'une part à l'entrée 101 de commande en tension du circuit intégré 20, de façon à faire travailler l'oscillateur interne 20a, commandé en tension, selon le diagramme de la figure 2, et d'autre part à l'entrée du circuit d'extraction Doppler 102. Le circuit 102 est, dans un mode de réalisation représenté à la figure 10, constitué par un circuit de mise en forme de sortie de signal de détection de mouvement Doppler, constitué principalement par un premier filtre passe haut 58 et un montage série de deux filtres passe bas de premier ordre respectivement 59 et 60 qui sont constitués à partir d'amplificateurs opérationnels ainsi qu'il est bien connu de l'homme de métier, et qui sont représentés à la figure 11.

Le circuit comporte ensuite un circuit 61 de détection de seuil, représenté à la figure 11, qui permet de détecter un signal Doppler autour d'une tension moyenne centrale de 4 volts égale à la moitié de la tension d'alimentation du schéma de 8 volts. De ce fait, on réalise une comparaison à l'aide d'un premier pont diviseur constitué par des résistances 62 et 63 d'une référence de tension qui est connectée à deux comparateurs de tension respectivement 64 et 65 qui reçoivent tous les deux le signal de détection Doppler de façon à produire selon le sens du mouvement Doppler l'allumage par le transistor 66 d'une alarme réalisée par une diode électro-luminescence 67 connectée en série avec une résistance 68 de limitation de courant, sur l'émetteur du transistor 66.

D'autre part, le signal de détection Doppler est disponible par l'intermédiaire d'un amplificateur suiveur, représenté séparément sur la figure 11, et connecté entre la borne d'entrée 70 et une borne de sortie 71 réservée à d'autres fins de traitement.

Dans un autre mode de réalisation, on ajoute un filtre passe haut à la sortie du comparateur de phase de façon à masquer les dérives thermiques dans l'habitacle qui induisent un signal de fausse détection Doppler aux alentours de 5 Hz. En réglant la fréquence de coupure basse du filtre passe haut supplémentaire à cette fréquence maximum des variations thermiques de l'habitacle on s'affranchit de diverses fausses alarmes.

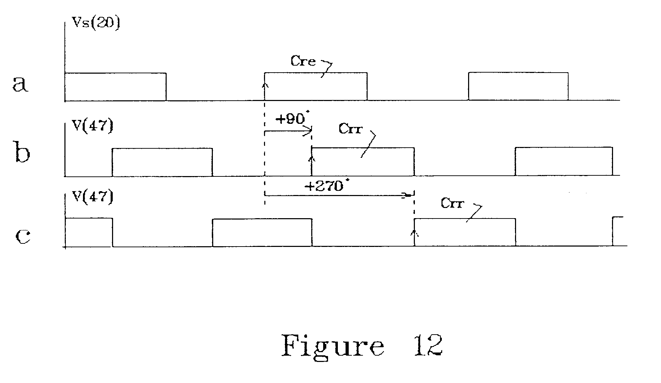

D'autre part, dans un autre mode de réalisation préféré de l'invention, grâce aux circuits 24-27 d'une part, et 44,45 d'autre part, on dispose d'un circuit permettant de se caler ou bien sur le front montant des créneaux de tension ou bien du signal d'excitation électrique ou bien du signal de détection issu de la capsule, ou d'autre part sur le front descendant de ces mêmes signaux. A la figure 12, on a représenté trois diagrammes (a) à (c) qui représentent respectivement la forme d'onde en sortie de l'oscillateur 20a, et la forme d'onde en sortie du comparateur de phase 50 dans un premier cas (b) et un second cas (c). En effet, à un angle de retard de phase, on peut associer un point de stabilisation. On a fixé une dynamique de phases en sortie du comparateur 50 comprise entre +90° et -90° d'angle de retard de phase.

Un retard de phase de 270° du courant par rapport à la tension de sortie de l'oscillateur 20a étant déterminé, si le retard augmente, la tension moyenne à la sortie du comparateur 50 diminue. Par conséquent, la fréquence aura tendance à suivre la même réduction (loi fréquence- phase). Pour stabiliser la chaîne de traitement autour d'un point de fonctionnement à sensibilité maximum, il faut produire la réaction contraire sur la capsule en émission. Or, l'avance de phase du courant dans la capsule diminue et la fréquence augmente. Il faut donc stabiliser le fonctionnement sur une pente négative de l'avance de phase du courant par rapport à la tension. On peut donc stabiliser la chaîne de traitement sur la fréquence de résonance série ou encore sur la fréquence de résonance parallèle avec une pente positive et un retard de phase de +90°.

Dans ce cas, on rajoute un déphasage de façon à travailler sur une phase relative des signaux comparés par le comparateur de phases à 270°.

Dans les essais réalisés selon l'invention, on a travaillé avec une fréquence de résonance et une fréquence d'excitation de la capsule ultrasonore à 40,5 kHz. Il fallait un retard de phase supplémentaire de 30°. En utilisant un filtrage passe bas à 250 Hz, on a pu mesurer des vitesses de déplacement d'objet dans le sens radial par rapport à la capsule de l'ordre de un mètre par seconde.

D'une manière générale, les retards de phase introduits dans le dispositif de l'invention sont déterminées de façon à produire un calage correcte de la boucle à verrouillage de phase constituée par les parties du dispositif.

Dans la détection d'intrusion à l'intérieur de l'habitable d'un véhicule, il a été possible de détecter des intrusions par les vitres ouvertes.

Dans les essais en particulier des mouvements même rapides étaient détectés quand la vitre avant était ouverte.

Pour résumer, le procédé de l'invention consiste donc à émettre ou à produire un signal d'excitation électrique qui est connecté à la capsule ultrasonore. Le signal collecté aux bornes de la capsule est comparé en phases avec le signal d'excitation électrique précité.

La comparaison de phases permet d'une part de détecter le signal de détection Doppler de mouvements, et d'autre part de produire le signal de calage du signal d'excitation électrique en utilisant uniquement comme élément de référence la capsule ultrasonore elle-même. On constate ainsi que le circuit générateur du signal d'excitation électrique de l'invention n'a pas besoin d'être asservi en fréquence à l'aide d'un quartz supplémentaire comme c'est l'habitude notamment pour les oscillateurs commandés en tension de l'état de la technique.

L'invention permet donc de réduire au minimum les composants du montage.

**Revendications**

1. Procédé de détection de mouvement par effet Doppler ultrasonore caractérisé en ce qu'il ne met en oeuvre qu'une seule capsule ultrasonore travaillant simultanément en émission et en réception, et en ce que:
   - dans une première étape, on produit un signal d'excitation électrique, dont les caractéristiques en amplitude, fréquence et/ou phase sont modifiables ;
   - dans une seconde étape, on relie ledit signal d'excitation électrique aux bornes d'une capsule génératrice d'une onde ultrasonore d'émission ;
   - dans une troisième étape, on prélève un signal de détection produit par la capsule et on compare les caractéristiques en amplitude, fréquence et/ou phase dudit signal de détection produit par la capsule avec celles dudit signal d'excitation électrique, de façon à produire un signal de détection de mouvement Doppler ; et, simultanément
   - on asservit les caractéristiques du signal d'excitation en fonction de celles du signal de détection produit par la capsule, de façon à stabiliser le fonctionnement en détection autour d'une valeur optimisant le rapport sensibilité de réception sur portée d'émission.

2. Procédé de détection de mouvement par effet Doppler selon la revendication 1, caractérisé en ce que la comparaison de caractéristiques est réalisée par une multiplication analogique.

3. Procédé de détection de mouvement par effet Doppler selon la revendication 1, caractérisé en ce que les signaux d'excitation électrique et de détection produits par la capsule étant de forme en créneau, la comparaison de caractéristiques est exécutée par une opération logique du type OU Exclusif.

4. Procédé selon la revendication 1, caractérisé en ce que la production du signal de détection de mouvement Doppler est réalisée par filtrage passe bas du signal de comparaison de caractéristiques.

5. Procédé de détection de mouvement par effet Doppler selon la revendication 1, caractérisé en ce que la production du signal d'excitation électrique est réalisée par un oscillateur commandé en tension, la commande en tension étant réalisée par le prélèvement d'une composante fréquentielle déterminée du signal de détection produit par la capsule.

6. Procédé de détection de mouvement par effet Doppler selon l'une des revendications précédentes, caractérisé en ce qu'il consiste à filtrer les signaux de faible variation de tension de façon à s'affranchir d'une dérive thermique dans l'habitacle surveillé.

7. Procédé de détection de mouvement par effet Doppler selon l'une des revendications précédentes, caractérisé en ce qu'il consiste, les signaux d'excitation et de détection étant de forme en créneau, à travailler sur les fronts descendants desdits signaux lors de la comparaison des phases.

8. Dispositif de détection de mouvement par effet Doppler au moyen d'un rayonnement ultrasonore caractérisé en ce qu'il comporte :
   - un générateur de signal (1) dont une borne de sortie produit un signal d'excitation électrique (le) et dont une borne d'entrée (15) reçoit un signal de commande et qui est relié à un circuit de commande (11) des caractéristiques en amplitude, fréquence et/ou phase du signal d'excitation électrique ;
   - une capsule ultrasonore (4) connectée par une première borne à une borne de sortie du générateur de signal (1) produisant un signal d'excitation électrique ;
   - un dipôle d'adaptation (5) connecté entre une seconde borne de la capsule et la masse électrique du montage ;
   - un comparateur de caractéristiques (6) de signal en amplitude, fréquence et/ou phase, dont une première entrée (7) est connectée au point commun de la capsule ultrasonore (4) et de son dipôle d'adaptation (5), et dont une seconde entrée (8) est connectée à la sortie du générateur de signal (1) produisant le signal d'excitation électrique ;
   - un circuit de commande (11), par extraction d'une composante du signal de détection (ld) produit par la capsule (4) pour stabiliser le fonctionnement du dispositif autour d'un point optimisant le rapport sensibilité de réception sur portée d'émission, et dont une borne de sortie produit un signal de commande qui contrôle les caractéristiques du signal d'excitation électrique ;
   - un circuit d'extraction (9) du signal de détection de mouvement Doppler dont l'entrée est connectée à une borne de sortie du comparateur de caractéristiques ou du circuit de commande ;
   - un circuit de détection (10) du mouvement Doppler connecté à la sortie du circuit d'extraction (9) de signal de détection.

9. Dispositif selon la revendication 8, caractérisé en ce que le générateur (1) du signal d'excitation électrique comporte un oscillateur commandé en tension (2).

10. Dispositif selon la revendication 9, caractérisé en ce que la borne de sortie (21) de l'oscillateur (20a) du générateur est connectée à une première borne de la capsule (38) par l'intermédiaire d'un amplificateur (3).

11. Dispositif selon les revendications 9 ou 10, caractérisé en ce que le circuit d'extraction (9) du signal de détection de mouvement Doppler comporte un filtre passe-bas.

12. Dispositif selon la revendication 9, caractérisé en ce que l'oscillateur commandé en tension (20a) est connecté par son entrée de commande de tension à un filtre intégrateur séparant une composante fréquentielle déterminée du reste du signal de détection.

13. Dispositif selon l'une des revendications 9 à 12 caractérisé en ce que la borne de sortie du circuit d'extraction du signal de détection de mouvement Doppler est connectée à l'entrée d'un circuit d'alarme (103) comportant un circuit de détection à seuil (64, 65) et un générateur d'alarme (66) proprement dit.

14. Dispositif selon la revendication 9, caractérisé en ce que le dipôle d'adaptation (5) comporte une résistance telle que la charge de la capsule (4) corresponde à la charge réglant le facteur de qualité de la capsule à la valeur minimale.

15. Dispositif selon la revendication 8, caractérisé en ce qu'il comporte un circuit à retard de phase ((24- 27 ; 24, 25) réglé sur la sensibilité maximale du système, connecte en amont du comparateur (6) de caractéristiques est connecté.

16. Dispositif d'alarme anti-intrusion pour habitacle de véhicule caractérisé en ce que le dispositif de détection de mouvement par effet Doppler selon l'une des revendications 9 à 15 est connecté à un dispositif générateur d'une alarme quand un mouvement est détecté à l'intérieur de l'habitacle du véhicule.

# Figure 1

Figure 2

Figure 3

Figure 4

# Figure 5

21 — Intégrateur
22 — Intégrateur
24–27 — retard de phase
28 — Amplificateur

20a — Oscillateur
21
20

41 — amplificateur mise en forme
48
50
47
49
101

44–45 — retard de phase

capsule — 38

40 — adaptation

100 — Circuit de commande

102 — filtrage extraction Doppler

103 — Détection alarme

Figure 6

Figure 7

Figure 8

Figure 9

Figure 10

de 50

58

59

60

vers
70

61

62

64

67

68

63

65

66

Figure 11

70

71

Figure 12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR-A-2 284 863 (SIEMENS AG.) <br> * le document en entier * <br> --- | | G01S15/52 |
| A | FR-A-2 344 899 (HOCHIKI CORP.) <br> * le document en entier * <br> ----- | | |

**DOMAINES TECHNIQUES RECHERCHES (Int.Cl.6)**

G01S
B60R
G08B

Le présent rapport a été établi pour toutes les revendications

| Lieu de la recherche | Date d'achèvement de la recherche | Examinateur |
|---|---|---|
| BERLIN | 22 Août 1995 | Danielidis, S |